# EUROPEAN PATENT APPLICATION

(11) **EP 2 541 379 A1**
(43) Date of publication of application: **02.01.2013**
(21) Application number: 11172118.9
(22) Date of filing: 30.06.2011
(51) Int. Cl.: G06F 3/044, G06F 3/045

(54) **Conductive multilayer structure and touch panel having the same**

(71) Applicant: Innovation & Infinity Global Corp., Hsinchu City (TW)
(72) Inventor: Chu, Chao-Chieh, Hsinchu City 300 (TW)
(74) Representative: Viering, Jentschura & Partner

(57) **Abstract**

A conductive multilayer structure includes a substrate (10), a transparent conductive film (11), a hard-coated layer (12) and a protective layer (13). The substrate (10) has opposite first and second surfaces (101,102), and has non-organic powders mixed therein. The thickness of the substrate (10) is ranged from 100 micrometers to 125 micrometers. The transparent conductive film (11) is formed on the first surface. The hard-coated layer (12) is formed on the second surface. The protective layer (13) is formed on the hard-coated layer (12).

## Description

### BACKGROUND OF THE INVENTION

### 1. Field of the Invention

The present invention relates to a multilayer structure and a touch panel having the same. In particular, the present invention relates to a conductive multilayer structure and a touch panel having the same.

### 2. Description of Related Art

Touch interfaces, such as touch panels are widely used in electronic products. For example, GPS units, PDAs, cell phones and table PCs may be controlled by touch panels. Especially for mobile electronic products, the touch interfaces have replaced the traditional input interfaces due to the properties, such as user-friendly operation for intuitive access. Furthermore, the volume of mobile electronic products is reduced because it is not necessary to carry the keyboards and computer mouse with the mobile electronic products.

In terms of touch panel technology, there are resistive, capacitive, electro-manganic, infra-red and ultra-sonic touch panels commonly used in the market. Resistive touch panels have a top plate and a bottom plate separated by insulating dots, with the inner surface of each plate coated with a transparent conductive layer. The Resistive touch panel is pressed by an object to make a contact of touch point and the coordinate of the touch point is recorded to activate a touch signal. A capacitive touch panel is coated with a material that conducts a continuous electrical current across a sensor so as to create a electrical filed in both the horizontal and vertical axes. When the sensor's field is altered by user's finger, electronic circuits located at the corners of the panel are applied to measure the resultant distortion and send the information about the event to the controller of the device.

The plates of the panels could be a glass substrate or a plastic substrate. For achieving the desired structural strength and wear resistance, the substrate, for example a PET substrate, has a thicker thickness which results in the thicker and heavy panel structures. On the other hand, it is necessary to press a greater touch force to activate the tough signals due to the thicker PET substrate. Therefore, in view of this, the inventor proposes the present invention to overcome the above problems based on his significant expert experience and deliberate research.

### SUMMARY OF THE INVENTION

One object of the instant disclosure is providing a conductive multilayer structure and a touch panel thereof. The conductive multilayer structure has reduced thickness, but has desired properties, for example, the hardness and the wear resistance. On the other hand, the touch force to activate the touch signals of the touch panel having the conductive multilayer structure can be decreased so as to improve the touch sensitivity.

The instant disclosure provides a conductive multilayer structure comprising: a substrate having opposite first and second surfaces, wherein the substrate has non-organic powders mixed therein, the thickness of the substrate is ranged from 100 micrometers to 125 micrometers; a transparent conductive film formed on the first surface; a hard-coated layer formed on the second surface; and a protective layer formed on the hard-coated layer.

The touch panel at least includes a conductive multilayer structure. The conductive multilayer structure includes a substrate having opposite first and second surfaces, wherein the substrate has non-organic powders mixed therein, the thickness of the substrate is ranged from 100 micrometers to 125 micrometers; a transparent conductive film formed on the first surface; a hard-coated layer formed on the second surface; and a protective layer formed on the hard-coated layer.

Due to the addition of the non-organic powders mixed with the substrate, the final product could have required properties in the case of reducing the thickness thereof. In other words, the requirement of the hardness and the wear resistance, and the requirement of light-weight and thin-thickness are both met according to the instant disclosure.

For further understanding of the present invention, reference is made to the following detailed description illustrating the embodiments and examples of the present invention. The description is for illustrative purpose only and is not intended to limit the scope of the claim.

### BRIEF DESCRIPTION OF THE DRAWINGS

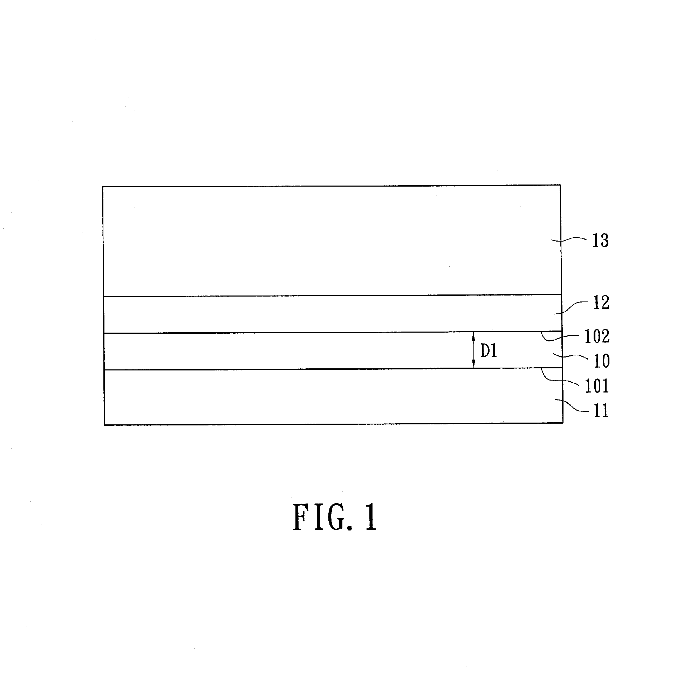

Fig. 1 shows a perspective view of the conductive multilayer structure of the instant disclosure.

### DETAILED DESCRIPTION OF THE PREFERRED EMBODIMENTS

The present invention provides a conductive multilayer structure of thin-thickness and light-weight properties. By using the conductive multilayer structure of the instant disclosure, the force pressed on the touch panel may be reduced while pointing and touching the touch panel.

Please refer to Fig. 1; the conductive multilayer structure at least includes a substrate 10, a transparent conductive film 11, a hard-coated layer 12 and a protective layer 13.

In the exemplary embodiment, the substrate 10 may be a transparent plate, for example a polycarbonate (PC) plate, a polymethylmethacrylate (PMMA) film or a polyethylene terephthalate (PET) film. Preferably, the substrate 10 may have properties of flexibility, light-weight and high toughness. The substrate 10 may be, for example, made of polyster resin, menthyl acetate resin, polyethersulfone rein, polycarbonate resin, polyamide resin, polyimides resin, polyolefins resin, methacrylic acid resin, polyvinyl chloride resin, poly(vinylidene chloride) resin, polystyrene resin, polyvinyl alcohol resin, polyarylsulfone resin or Polyphenylene sulfide resin. Moreover, the PET substrate 10 of the instant disclosure may have non-organic powders mixed therein. The non-organic powders may be conductive or insulating non-organic powders which have particles ranged from 0.5 to 20 um, such as silicon oxide powders, calcium oxide powders, aluminum oxide powders, titanium oxide powders, zirconium oxide powders, tin oxide powders, indium oxide powders, cadmium oxide powders, or stibium oxide powders. Furthermore, the PET substrate 10 of the instant disclosure may have organic powders of crosslinked or un-crosslinked polymer of poly (methyl methacrylate) and polyurethane. The concentration of the non-organic powders mixed in the PET substrate 10 is about 50 wt%. The mixed non-organic powders are provided for increasing the abrasion-proof property of the substrate 10. Therefore, the substrate 10 may have thinner thickness but the desired abrasion-proof property. Comparing to the thickness of 188 micrometers (um) of the traditional PET film, the thickness of the substrate 10 of the instant disclosure is ranged from 100 micrometers to 125 micrometers. As a result, the conductive multilayer structure of the instant disclosure may meet the requirements of thin-thickness and light-weight.

The transparent conductive film 11 is formed on the first surface 101 (i.e., the bottom surface) of the substrate 10. In detail, the transparent conductive film 11 may be transparent conductive oxides (TCOs), such as amorphous indium tin oxide (ITO) or crystalline (or polycrystalline) indium tin oxide, indium zinc oxide (IZO), chrome oxide, ZnO, or TiO. Alternatively, the transparent conductive film 11 may be transparent organic conductive materials. The transparent conductive film 11 is formed by, for example, a vapor deposition method, a sputtering method, an ion-beam deposition method or a sol-gel method.

The hard-coated layer 12 is formed on the second surface 102 (i.e., the top surface) of the substrate 10. The hard-coated layer 12 may be hard-coated film made of polyurethane resin, alkyd resin, acrylic acid resin or silandrone resin. The thickness of the hard-coated layer 12 may be ranged from 6 micrometers to 10 micrometers. To protect the PET substrate 10 from degradation of light radiation, especially UV light radiation, the hard-coated layer 12 may exhibit further enhanced properties such as anti-UV, chemistry resistance or high abrasion resistance.

The protective layer 13 is formed on the hard-coated layer 12, for example, which is a SiO₂ film formed by a vacuum sputtering method, a chemical vapor deposition, or electron beam deposition. The thickness of the protective layer 13 is ranged from 1 micrometer to 4 micrometers. In an alternatively embodiment, the protective layer 13 may be a silicon nitride film or photo-resist.

The conductive multilayer structure of the present invention has reduced thickness, but still meets the requirement of application. For example, the conductive multilayer structure of the present invention may endure 200000 cycles in the abrasion test and the hardness of the conductive multilayer structure is more than 3H due to the addition of the non-organic powders in the substrate 10. In other words, the conductive multilayer structure of the present invention has desired properties even the thickness thereof is reduced because the added non-organic powders compensate the decrease of the substrate thickness.

The conductive multilayer structure of the present invention may be used in display devices, such as touch panels, LCDs, electro-luminescence monitors. Preferably, the conductive multilayer structure of the present invention may be applied as a transparent electrode of the touch panel.

In structural detail, a resistive touch panel has a touch electrode with conductive film and a display electrode with transparent conductive film. Further, the touch electrode and the display electrode have spacers therebetween. The conductive multilayer structure of the present invention may be applied for either or both of the two electrodes. When a touch event occurs on the touch electrode, the two electrodes are closed and thus causing an electrical contact. Therefore, the point of the closed electrodes can be defined as an "ON" signal. When the touch event dismisses, the opening of the electrodes can be defined as an "OFF" signal.

The present invention at least has the following characteristics.

1. Because of the reduced thickness of the conductive multilayer structure of the present invention, the sensitivity of the touch panel having the present conductive multilayer structure may be improved. On the other hand, the touch force to activate the touch signals is reduced. In an experimental test, the touch force of 5 grams to 15 grams can activate the touch signals.

2. The properties of the conductive multilayer structure of the present invention are described as follows: cross hatch test is 100/100, and pencil hardness averaged 3H. Therefore, the conductive multilayer structure may meet the requirement of high wear resistance and long life during applying in touch panel of display device, such as TFT-LCDs LCD-TVs.

The description above only illustrates specific embodiments and examples of the present invention. The present invention should therefore cover various modifications and variations made to the herein-described structure and operations of the present invention, which fall within the scope of the present invention as defined in the following appended claims.

## Claims

1. A conductive multilayer structure comprising:
a substrate (10) having opposite first and second surfaces (101,102), wherein the substrate has non-organic powders mixed therein, the thickness of the substrate is ranged from 100 micrometers to 125 micrometers;
a transparent conductive film (11) formed on the first surface;
a hard-coated layer (12) formed on the second surface; and
a protective layer (13) formed on the hard-coated layer.

2. The conductive multilayer structure as claimed in claim 1, wherein the transparent conductive film (11) is transparent conductive oxides.

3. The conductive multilayer structure as claimed in claim 2, wherein the transparent conductive film (11) is indium tin oxide.

4. The conductive multilayer structure as claimed in claim 3, wherein the transparent conductive film (11) is amorphous indium tin oxide.

5. The conductive multilayer structure as claimed in claim 1, wherein the thickness of the hard-coated layer (12) is ranged from 6 micrometers to 10 micrometers.

6. The conductive multilayer structure as claimed in claim 1, wherein the protective layer (13) is a SiO₂ layer.

7. The conductive multilayer structure as claimed in claim 6, wherein the thickness of the protective layer (13) is ranged from 1 micrometer to 4 micrometers.

8. A touch panel, at least comprising:
a conductive multilayer structure, wherein the conductive multilayer structure includes:
a substrate (10) having opposite first and second surfaces (101,102), wherein the substrate has non-organic powders mixed therein, the thickness of the substrate is ranged from 100 micrometers to 125 micrometers;
a transparent conductive film (11) formed on the first surface;
a hard-coated layer (12) formed on the second surface; and
a protective layer (13) formed on the hard-coated layer.

9. The touch panel as claimed in claim 8, wherein the thickness of the hard-coated layer (12) is ranged from 6 micrometers to 10 micrometers.

10. The touch panel as claimed in claim 8, wherein the protective layer (13) is a SiO₂ layer, and the thickness of the protective layer is ranged from 1 micrometer to 4 micrometers.
